# EUROPEAN PATENT APPLICATION

(11) **EP 4 102 728 A1**
(43) Date of publication of application: **14.12.2022**
(21) Application number: 20919565.0
(22) Date of filing: 20.02.2020
(51) Int. Cl.: H04B 5/00

(54) **BACKSCATTER COMMUNICATION METHODS, ELECTRONIC DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Zhi, Dongguan, Guangdong 523860 (CN)
(74) Representative: Penza, Giancarlo
(86) International application number: PCT/CN2020/076068
(87) International publication number: WO 2021/163971

(57) **Abstract**

Disclosed is a backscatter communication method. The method comprises: a terminal device sending first indication information to a network device, wherein the first indication information is used to indicate that the terminal device has the ability to receive a backscatter communication signal. Further disclosed are another backscatter communication method, an electronic device and a storage medium.

## Description

### Technical Field

The present application relates to the field of wireless communication technologies, in particular to a backscatter communication method, an electronic device, and a storage medium.

### Background

In related art, it is not clear how terminal devices can efficiently and safely acquire information collected by electronic devices deployed around a human body.

### Summary

Embodiments of the application provide a backscatter communication method, an electronic device and a storage medium, which can efficiently and safely acquire information collected by electronic devices deployed around a human body.

In a first aspect, a method for backscatter communication is provided in an embodiment of the present application. The method includes that a terminal device sends first indication information to a network device, wherein the first indication information is used to indicate that the terminal device has an ability of receiving a backscatter communication signal.

In a second aspect, a method for backscatter communication is provided in an embodiment of the present application. The method includes that a network device receives first indication information sent by a terminal device, wherein the first indication information is used to indicate that the terminal device has an ability of receiving a backscatter communication signal.

In a third aspect, a method for backscatter communication is provided in an embodiment of the present application. The method includes that a terminal device sends a scheduling request to a network device, wherein the scheduling request is used to request the network device to schedule a downlink signal, and the downlink signal is used for a first electronic device to reflect a signal.

In a fourth aspect, a method for backscatter communication is provided in an embodiment of the present application. The method includes a network device receives a scheduling request sent by a terminal device, wherein the scheduling request is used to request the network device to schedule a downlink signal, and the downlink signal is used for a first electronic device to reflect a signal.

In a fifth aspect, a terminal device is provided in an embodiment of the present application. The terminal device includes a first sending unit that is configured to send first indication information to a network device, wherein the first indication information is used to indicate that the terminal device has an ability of receiving a backscatter communication signal.

In a sixth aspect, a network device is provided in an embodiment of the present application. The network device includes a third receiving unit that is configured to receive first indication information sent by a terminal device, wherein the first indication information is used to indicate that the terminal device has an ability of receiving a backscatter communication signal.

In a seventh aspect, a terminal device is provided in an embodiment of the present application. The network device includes a fourth sending unit that is configured to send a scheduling request to a network device, wherein the scheduling request is used to request the network device to schedule a downlink signal, and the downlink signal is used for a first electronic device to reflect a signal.

In an eighth aspect, a network device is provided in an embodiment of the present application. The network device includes a sixth receiving unit, configured to receive a scheduling request sent by a terminal device, wherein the scheduling request is used to request the network device to schedule a downlink signal, and the downlink signal is used for a first electronic device to reflect a signal.

In a ninth aspect, a terminal device is provided in an embodiment of the present application. The terminal device includes a processor and a memory that is configured to store a computer program which is capable of being run on the processor, wherein the processor is configured to perform the acts of the method for backscatter communication performed by the terminal device when running the computer program.

In a tenth aspect, a network device is provided in an embodiment of the present application, the network device includes a processor and a memory that is configured to store a computer program that is capable of being run on the processor, wherein the processor is configured to perform the acts of the method for backscatter communication performed by the network device when running the computer program.

In an eleventh aspect, a chip is provided in an embodiment of the application. The chip includes a processor for invoking and running a computer program from a memory, so that a device having the chip installed therein performs the method for backscatter communication performed by the terminal device.

In a twelfth aspect, a chip is provided in an embodiment of the application. The chip includes a processor for invoking and running a computer program from a memory, so that a device having the chip installed therein performs the method for backscatter communication performed by the network device.

In a thirteenth aspect, a storage medium is provided in an embodiment of the present application. The storage medium stores an executable program, wherein, when the executable program is executed by a processor, the method for backscatter communication performed by the terminal device is implemented.

In a fourteenth aspect, a storage medium is provided in an embodiment of the present application. The storage medium stores an executable program, wherein, when the executable program is executed by a processor, the method for backscatter communication performed by the network device is implemented.

In a fifteenth aspect, a computer program product is provided in an embodiment of the present application. The computer program product includes computer program instructions that enable a computer to perform the method for backscatter communication performed by the terminal device.

In a sixteenth aspect, a computer program product is provided in an embodiment of the present application. The computer program product includes computer program instructions that enable a computer to perform the method for backscatter communication performed by the network device.

In a thirteenth aspect, a computer program is provided in an embodiment of the present application, which enables a computer to perform the method for backscatter communication performed by the terminal device.

In an eighteenth aspect, a computer program is provided in an embodiment of the present application, which enables a computer to perform the method for backscatter communication performed by the network device.

The embodiments of the present application provide a method for backscatter communication, an electronic device and a storage medium. The method includes that a terminal device sends first indication information to a network device, wherein the first indication information is used to indicate that the terminal device has an ability of receiving a backscatter communication signal. In this way, the network device can schedule the downlink signal for the reflection of the first electronic device, and the generated reflection signal can carry the information collected by the first electronic device. Furthermore, the terminal device can acquire the information collected by the first electronic device based on the backscatter communication under the cellular communication, which not only simplifies the structure of the terminal device, but also prevents the user from being exposed to the electromagnetic radiation environment for acquiring the first electronic device.

### Brief Description of Drawings

FIG. 1 is a schematic diagram of a composition structure of a communication system according to an embodiment of the present application.
FIG. 2 is a schematic diagram of an optional processing flow of a method for backscatter communication according to an embodiment of the present application.
FIG. 3 is a schematic diagram of another optional processing flow of a method for backscatter communication according to an embodiment of the present application.
FIG. 4 is a schematic diagram of an optional composition structure of a terminal device according to an embodiment of the present application.
FIG. 5 is a schematic diagram of an optional composition structure of a network device according to an embodiment of the present application.
FIG. 6 is a schematic diagram of another optional composition structure of a terminal device according to an embodiment of the present application.
FIG. 7 is a schematic diagram of another optional composition structure of a network device according to an embodiment of the present application.
FIG. 8 is a schematic diagram of a hardware composition structure of an electronic device according to an embodiment of the present application.

### Detailed Description

In order to understand features and technical contents of embodiments of the present application in more detail, realizations of the embodiments of the present application will be described in detail below in combination with accompanying drawings, which are for reference and description only, but are not intended to limit the embodiments of the present application.

In a wireless communication system, a transmitter generates a carrier with a frequency or some frequencies, and some useful information is superimposed on the carrier generated by the transmitter by means of amplitude/phase/frequency offset, etc.; carriers carrying useful information are then transmitted to a space environment by antennas. In this process, for the transmitter, energy consumption occurs mainly in the process of generating carriers by the transmitter.

There are a large amount of electromagnetic wave signals of various frequencies in the space environment. Backscatter communication is a technology that utilizes electromagnetic waves in the space environment to transmit useful information. In a device utilizing backscatter communication, because there is no radio frequency device special for generating carriers, then the cost and power consumption of the device and the volume of the device are very small. When this type of devices are needed to transmit information, antennas can be used to reflect electromagnetic waves in a space environment, and meta-materials, diodes or other devices are used to superimpose the information to be transmitted on the reflected electromagnetic waves. For example, by changing frequencies, phases and amplitudes of the reflected electromagnetic waves, a purpose of transmitting information can be achieved.

Due to small cost, power consumption and device volume of a backscatter communication technology, it is very suitable for information transmission of environmental sensors. For example, temperature sensors and humidity sensors dispersed in an environment can use backscatter communication to transmit collected information. This type of sensors are in large demand and have a wide dispersion range, and a service life of a sensor battery can be greatly prolonged by using backscatter communication, and in some designs, battery is not even needed for power. Therefore, backscatter communication has a very good application prospect in this type of environmental sensors.

Reflection scattering communication also has a good application prospect in sensors around human body. In order to monitor the health, safety and other factors of human body, a large amount of sensors for medical and health monitoring, such as monitoring temperature, specific gas concentration, heart rate, blood oxygen concentration and blood sugar, and sensors for safety monitoring, such as monitoring acceleration, can be arranged around human body. Because these sensors are distributed around the human body, they are not suitable to be configured with active emission capability due to electromagnetic radiation exposure and other factors. When monitoring human health, the sensor can be powered by body temperature drive. The sensor is passive from collecting signals to transmitting information, which is suitable for human health monitoring.

The basic principle of backscatter communication is introduced above, and the energy acquisition technology combined with backscatter communication is introduced below.

As described above, backscatter communication is suitable for low-cost sensors. Although the use of backscatter communication can greatly reduce the energy needed for communication, the sensor still needs energy to be driven in the process of collecting signals. If the energy for collecting signals by these sensors can also be obtained from the environment, the process of collecting signals and transmitting signals by sensors will only depend on environmental electromagnetic waves, that is, the sensors are passive, which will greatly expand the applicable scenarios of backscatter communication.

Backscatter communication depends on electromagnetic waves in the surrounding environment, but in some scenarios, when a sensor needs to transmit data, there may be no suitable electromagnetic wave in the surrounding environment. Although there are abundant sources of electromagnetic waves in the environment, however, because the structure of a device using backscattering communication is usually very simple, the design of its reflection antenna will be relatively simple. If the electromagnetic wave in the surrounding environment does not match the reflection antenna of the device using backscattering communication, the information collected by the device using backscattering communication cannot be transmitted through the electromagnetic wave in the environment.

In order to solve the above problems, a device receiving backscattering signals can be used to actively emit electromagnetic waves with specific frequencies. Wherein, the specific frequency is a frequency supported by the antenna of the device supporting backscatter communication, and the purpose of information transmission based on backscatter communication is achieved by receiving the reflected signal of the signal.

However, in this solution, the transmitter transmitting electromagnetic waves used in backscatter communication and the receiver receiving reflected signals are located on the same device, which will cause very serious self-interference (that is, the transmitter interferes with the receiver located on the same device). Because backscatter communication relies solely on reflected electromagnetic waves to transmit information, the transmission distance is generally not too far. With the above method, the time interval from the transmitter sending the signal to the receiver receiving the reflected signal is very short, usually less than one microsecond (us), so it is impossible to avoid the strong interference of the transmitted signal with the received signal in a time division manner.

In order to suppress the strong interference of the transmitter with the receiver, a method that can be adopted includes adding a filter at the front end of the receiver to filter out strong interference. Digital method is used to reconstruct interference and eliminate it. Although the above methods can solve the problem of strong interference of the transmitter with the receiver, the solutions are complicated. Adoption of any of the above methods will significantly increase the implementation complexity of the receiver, and then increase the cost of the receiver. As mentioned earlier, one of major uses of backscatter communication is to collect signals from low-cost environmental sensors, but in order to solve the problem of strong self-interference, the cost of using backscatter communication will be greatly increased.

When backscatter communication is applied to sensors which monitor human health, the mobile phone is suitable for receiving the reflected signals in backscatter communication, however, if the mobile phone transmits signals to human body and the mobile phone receives the reflected signals again, the complexity of the receiver in the mobile phone will be greatly increased. Moreover, because the mobile phone is near the human body, when the mobile phone directly transmits signals to the human body, it will increase the risk of users being exposed to electromagnetic radiation.

The technical solutions of the embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, a LTE frequency division duplex (FDD) system, a LTE time division duplex (TDD) system, an advanced long term evolution (LTE-A) system, a new radio (NR) system, an evolution system of an NR system, a LTE-based access to unlicensed spectrum (LTE-U) system, an NR-based access to unlicensed spectrum (NR-U) system, a universal mobile telecommunication system (UMTS), a worldwide interoperability for microwave access (WiMAX) communication system, wireless local area networks (WLAN), wireless fidelity (WiFi), a next generation communication system or other communication systems, etc.

System architectures and service scenarios described in the embodiments of the present application are intended to illustrate the technical solutions of the embodiments of the present application more clearly, but do not constitute a limitation to the technical solutions provided by the embodiments of the present application. Those of ordinary skilled in the art may know that with evolvement of network architectures and emergence of new service scenarios, the technical solutions provided by the embodiments of the present application are also applicable to similar technical problems.

The network device involved in an embodiment of the present application may be an ordinary base station (such as a NodeB, or an eNB, or a gNB), a new radio controller (an NR controller), a centralized unit, a new radio base station, a radio remote module, a micro base station, a relay, a distributed unit, a transmission reception point (TRP), a transmission point (TP), or any other device. An embodiment of the present application does not limit the specific technology and the specific device form used by the network device. For convenience of description, in all embodiments of the present application, the above-mentioned apparatuses for providing wireless communication functions for a terminal device are collectively referred to as a network device.

In an embodiment of the present application, a terminal device may be any kind of terminal, for example, the terminal device may be a user equipment for machine type communication. In other words, the terminal may be referred to as a User Equipment (UE), a Mobile Station (MS), a mobile terminal, a terminal, etc., which may communicate with one or more core networks via a Radio Access Network (RAN). For example, a terminal device may be a mobile phone (or "cellular" phone), a computer with a mobile terminal, etc. For example, terminal devices may also be portable, pocket-size, handheld, computer-built or vehicle-mounted mobile devices that exchange speech and/or data with wireless access networks. It is not specifically limited in the embodiments of the present application.

Optionally, the network device and the terminal device may be deployed on land, including indoors or outdoors, hand-held or vehicle-mounted; or may be deployed on a water surface; or may be deployed on a plane, a balloon, or a satellite in the air. The embodiments of the present application do not limit application scenarios of the network device and the terminal device.

Optionally, communications between a network device and a terminal device and between terminal devices may be performed through a licensed spectrum, or an unlicensed spectrum, or both, at the same time. Communications between a network device and a terminal device and between terminal devices may be performed through a spectrum below 7 gigahertz (GHz), or through a spectrum above 7GHz, or using both a spectrum below 7GHz and a frequency spectrum above 7Ghz at the same time. An embodiment of the present application does not limit spectrum resources used between a network device and a terminal device.

Generally speaking, the traditional communication system supports the limited quantity of connections, and is also easy to implement. However, with the development of communication technology, the mobile communication systems will not only support traditional communication, but also support, for example, the device to device (D2D) communication, the machine to machine (M2M) communication, the machine type communication (MTC), or the vehicle to vehicle (V2V) communication, etc., and the embodiments of the present application may also be applied to these communication systems.

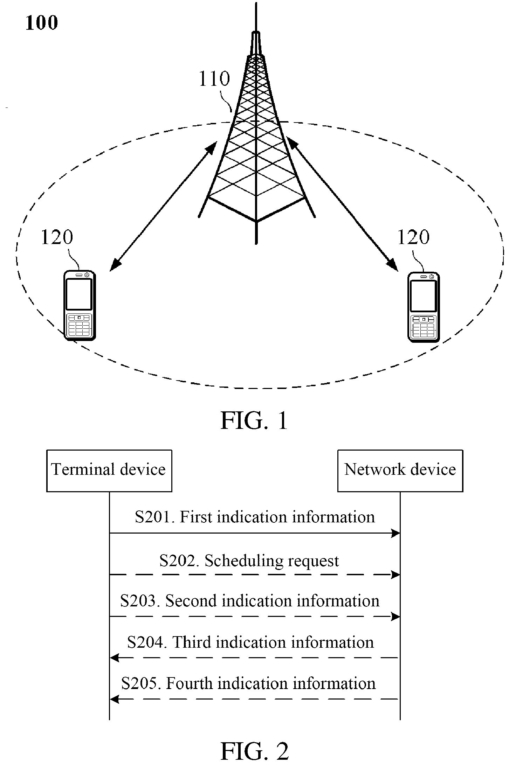

Exemplarily, a communication system 100 applied in an embodiment of the present application is shown in FIG. 1. The communication system 100 may include a network device 110. The network device 110 may be a device that communicates with terminal devices 120 (or referred to as communication terminals, or terminals). The network device 110 may provide communication coverage for a specific geographical area, and may communicate with terminal devices located within the coverage area. Optionally, the network device 110 may be a Base Transceiver Station (BTS) in a GSM system or CDMA system, or a NodeB (NB) in a WCDMA system, or an Evolutional Node B (eNB or eNodeB) in an LTE system, or a radio controller in a Cloud Radio Access Network (CRAN), or the network device may be a mobile switching center, a relay station, an access point, a vehicle-mounted device, a wearable device, a hub, a switch, a bridge, a router, a network side device in a 5G network, or a network device in a future evolved Public Land Mobile Network (PLMN), etc.

The communication system 100 further includes at least one terminal device 120 located within the coverage range of the network device 110. As used herein, the term "terminal device" includes, but is not limited to, a device configured to connect via a wired circuit, for example, a Public Switched Telephone Network (PSTN), a Digital Subscriber Line (DSL), a digital cable, a direct cable; and/or another data connection/network, and/or via a wireless interface, for instance, for a cellular network, a Wireless Local Area Network (WLAN), a digital television network such as a DVB-H network, a satellite network, and an AM-FM broadcast transmitter; and/or an apparatus, of another terminal device, configured to receive/send a communication signal; and/or an Internet of Things (IoT) device. A terminal device configured to communicate via a wireless interface may be referred to as "a wireless communication terminal", "a wireless terminal" or "a mobile terminal". Examples of the mobile terminal include, but are not limited to, a satellite or cellular phone; a Personal Communications System (PCS) terminal capable of combining a cellular radio phone with data processing, facsimile, and data communication capabilities; a Personal Digital Assistant (PDA) that may include a radio phone, a pager, internet/intranet access, a Web browser, a memo pad, a calendar, a Global Positioning System (GPS) receiver; and a conventional laptop and/or palmtop receiver or another electronic apparatus including a radio phone transceiver. The terminal device may refer to an access terminal, a User Equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, a vehicle-mounted device, a wearable device, a terminal device in a 5G network, or a terminal device in a future evolved Public Land Mobile Network (PLMN), or the like.

Optionally, Device to Device (D2D) communication may be established between the terminal devices 120.

Optionally, the 5G system or 5G network may be referred to as a New Radio (NR) system or an NR network.

FIG. 1 illustrates one network device and two terminal devices. Optionally, the communication system 100 may include multiple network devices, and other quantity of terminal devices may be included within the coverage area of each network device, which is not limited in the embodiments of the present application.

Optionally, the communication system 100 may also include another network entity, such as a network controller, a mobile management entity, etc., which is not limited in the embodiments of the present application.

It should be understood that a device with a communication function in a network/system in the embodiments of the present application may also be referred to as a communication device. Taking the communication system 100 shown in FIG. 1 as an example, communication devices may include a network device 110 and terminal devices 120 which have communication functions, and the network device 110 and the terminal devices 120 may be the specific devices described above, and will not be described repeatedly herein. The communication devices may also include other devices in the communication system 100, for example other network entities, such as network controllers and mobile management entities, which is not limited in the embodiments of the present application.

An optional processing flow of a method for backscatter communication provided in an embodiment of the present application, as shown in FIG. 2, includes the following act S201.

In the act S201, a terminal device sends first indication information to a network device, wherein the first indication information is used to indicate that the terminal device has an ability of receiving a backscatter communication signal.

In some embodiments, a first electronic device located near a human body may send information collected by the first electronic device to the terminal device by reflecting a cellular downlink signal sent by the network device, in a case that the terminal device has the capability of receiving a backscatter communication signal.

In some embodiments, the first electronic device may be a sensor near the human body, such as a temperature sensor that monitors a temperature of the human body.

In some embodiments, the first indication information may also be used to indicate at least one of: the number of the first electronic devices using downlink signals, an amount of information that the first electronic device needs to transmit, a waveform and/or a modulation mode superimposed by the first electronic device on the reflected downlink signal, and frequency ranges of downlink signals that different types of first electronic devices can reflect. Wherein, the downlink signal is sent by the network device. The number of the first electronic devices which use the downlink signal may be the number of sensors disposed near the human body. The amount of the information that the first electronic device needs to transmit may be a sum of amounts of information that all sensors disposed near the human body need to send.

With a content indicated by the first indication information, the network device can take into account a demand of the first electronic device on the downlink signal when scheduling the downlink signal. For example, when the number of reflected signals to be received by the terminal device is relatively large, the network device should take into account that the downlink signal cannot carry too much information when scheduling the downlink signal. If the downlink signal itself is a high-order modulated signal, when the downlink signal and a large amount of reflected signals are received by the terminal device together, a reception quality of the downlink signal may be degraded. For another example, the frequency ranges of the downlink signals that the different types of first electronic devices can reflect may be different. For example, a first electronic device close to a body may need a lower frequency, while a first electronic device hanging on clothes may use a higher frequency, and the network device may need to schedule downlink signals of different frequency ranges for different types of first electronic devices.

In a specific embodiment, the terminal device sends the network device first indication information which indicates that the terminal device has a capability of receiving a backscatter communication signal; the network device sends the downlink signal according to the first indication information, the first electronic device reflects the downlink signal, the terminal device receives the downlink signal and a reflected signal formed by the first electronic device reflecting the downlink signal. Wherein, the reflected signal may include information collected by the first electronic device. The first electronic device may be a sensor disposed on a user's body for monitoring the user's body state, and the terminal device may be a mobile phone of the user.

In some embodiments, the method may further include act S202.

In the act S202, the terminal device sends a scheduling request to the network device, wherein the scheduling request is used to request the network device to schedule a downlink signal.

In some embodiments, the terminal device sends the scheduling request to the network device in a case that the terminal device has a demand on collecting information collected by the first electronic device; wherein the scheduling request may be sent by an RRC signaling. The downlink signal is used for the first electronic device to reflect a signal.

In some embodiments, the method may further include act S203.

In the act S203, the terminal device sends second indication information to the network device.

In some embodiments, the second indication information is used to indicate a capability of the terminal device and/or first time, and the first time is time during which the terminal device does not receive the downlink signal.

For example, because the terminal device may need to receive the downlink signal sent by the network device to the terminal device and the reflected signal sent by the first electronic device at the same time, especially in a case of a large amount of the reflected signals, there is a challenge to a receiving capability of the terminal device. In addition, due to a low cost of the first electronic device and uncontrollable factors such as reflection time and frequency, the reflected signal cannot be well aligned with a downlink signal sent by the network device in terms of arrival time and frequency, so that the terminal device may not receive a normal cellular communication signal (i.e. the downlink signal sent by the network device) in a short time after the reflected signal is received. In this scenario, when sending the scheduling request to the network device for requesting to schedule the downlink signal, the terminal device may require the network device to give the terminal device a certain processing time after the downlink signal is scheduled; the network device can indicate, in the scheduling information, that the terminal device does not need to receive the downlink signal for a period of time (such as in several symbols or scheduling units) after the downlink signal; during this period of time, the network device does not send any downlink scheduling to the terminal device. Wherein, when requesting the network device to give the terminal device a certain processing time after the downlink signal is scheduled, the terminal device can directly send the first time to the network device; the terminal device can also send a capability of the terminal device to the network device. Different capabilities of the terminal device correspond to different first times, and the network device can be aware of processing time that the terminal device expects to obtain, according to a capability of the terminal device.

In some embodiments, the method may further include the following act S204.

In the act S204, the terminal device receives third indication information sent by the network device.

In some embodiments, the third indication information is used to indicate at least one of a frequency, time, and a type of the downlink signal which are used by the network device to send the downlink signal.

In some embodiments, the third indication information may be carried in a dedicated DCI or a common DCI.

In a specific implementation, taking third indication information which can be carried in a dedicated DCI as an example, if the number of first electronic devices needed to reflect signals is small and the amount of information needed to be transmitted by the first electronic device is also small, then the network device can take a downlink service channel, such as a Physical Downlink Shared Channel (PDSCH), as the downlink signal; at this time, the PDSCH includes information transmitted from the network device to the terminal device. If the number of the first electronic devices needed to reflect the signals is large or the amount of the information needed to be transmitted by the first electronic devices is large, then the network device can directly take a downlink reference signal, such as a downlink Demodulation Reference Signal (DMRS), as the downlink signal. Optionally, the network device informs the terminal device of the type of downlink signal.

In a specific implementation, taking third indication information which can be carried in a common DCI as an example, that is, the downlink signal sent by the network device in a broadcast mode is used as the reflected signal for the information collected by the first electronic device. For example, some terminal devices send, to the network device, requests for emitting the downlink signal at the same time, and the requests are similar in terms of types of first electronic devices and frequencies needed. In this scenario, the network device can save signaling overhead by sending downlink signals in the broadcast mode and can efficiently send downlink signals to the terminal devices. For example, through a common-DCI, a network device can notify a group of terminal devices that downlink signals are emitted at which time, by which frequency, and in which signal mode. The terminal devices can receive the reflected signal formed by the first electronic device reflecting the downlink signal, and the reflected signal carries the information collected by the first electronic device.

In some application scenarios, the first electronic device may be a sensor disposed near the human body, such as a sensor for monitoring human health, and there may be a very urgent demand on health monitoring. For example, the terminal device detects a sudden fall of the human body by its own acceleration sensor, or a smart watch detects cardiac arrest and then sends an alarm message to the terminal device. At this time, the terminal device needs to read information from a sensor near the body urgently. Therefore, there is a need of a mechanism for a terminal device to quickly send a request for scheduling downlink signals to a network device.

In some embodiments, the network device reserves, for the terminal device, resources for an emergency request in an uplink control channel, such as a Physical Uplink Control Channel (PUCCH); when the terminal device has a request for emergency scheduling, the terminal device can immediately sends a scheduling request to the network device by the reserved resources. When receiving the scheduling request sent by the terminal device, the network device can directly schedule the downlink signal to the terminal device, and the downlink signal can be used for the terminal device to obtain the information collected by the first electronic device. Optionally, when the terminal device uses the resources reserved by the network device to perform an emergency scheduling request, the scheduling request may carry only 1 bit of information.

In some embodiments, the method may further include the following act S205.

In the act S205, the terminal device receives fourth indication information sent by the network device.

In some embodiments, the fourth indication information is used to indicate the terminal device to use the downlink signal which has been scheduled by the network device, and the fourth indication information is used to indicate that the network device schedules at least one of a frequency, time used by the downlink signal, and a type of the downlink signal. Optionally, the fourth indication information is used to indicate at least one of time, a frequency, and a type of the downlink signal to be scheduled.

In a specific implementation, some of the downlink signals which have been scheduled by the network device cannot be used by the terminal device, for example, an MCS level of the downlink signals is high, an effect of receiving the reflected signal by the terminal device may be affected. If the downlink signals which has been scheduled by the network device cannot be used for reflection by the first electronic device, or the network device does not schedule the downlink signals, the fourth indication information is used to indicate at least one of the time, the frequencies of the downlink signals to be scheduled and the type of the downlink signal to be scheduled. The terminal device may discard a signal scheduled by the network device before the network device indicates the time and the frequencies of the downlink signals to be scheduled. Wherein, the fourth indication information can be carried in a dedicated DCI or a common DCI.

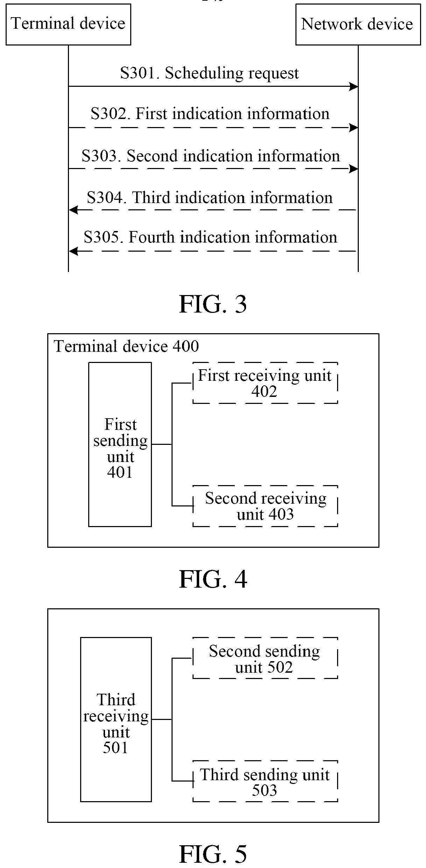

Another optional processing flow of a method for backscatter communication provided in an embodiment of the present application, as shown in FIG. 3, includes the following act S301.

In the act S301, a terminal device sends a scheduling request to a network device, wherein the scheduling request is used to request the network device to schedule a downlink signal, and the downlink signal is used for a first electronic device to reflect a signal.

In some embodiments, the terminal device sends the scheduling request to the network device in a case that the terminal device has a demand on collecting information collected by the first electronic device; wherein the scheduling request may be sent by an RRC signaling. The downlink signal is used for the first electronic device to reflect signals.

In some embodiments, the method may further include the following act S302.

In the act S302, the terminal device sends first indication information to the network device, wherein the first indication information is used to indicate that the terminal device has an ability of receiving a backscatter communication signal.

In some embodiments, a first electronic device located near a human body may send information collected by the first electronic device to the terminal device by reflecting a cellular downlink signal sent by the network device, in a case that the terminal device has the capability of receiving a backscatter communication signal.

In some embodiments, the first electronic device may be a sensor near the human body, such as a temperature sensor that monitors a temperature of the human body.

In some embodiments, the first indication information may also be used to indicate at least one of: the number of the first electronic devices using downlink signals, an amount of information that the first electronic device needs to transmit, a waveform and/or a modulation mode superimposed by the first electronic device on the reflected downlink signal, and frequency ranges of downlink signals that different types of first electronic devices can reflect. Wherein, the downlink signal is sent by the network device. The number of the first electronic devices which use the downlink signal may be the number of sensors disposed near the human body. The amount of the information that the first electronic device needs to transmit may be a sum of amounts of information that all sensors disposed near the human body need to transmit.

With a content indicated by the first indication information, the network device can take into account a demand of the first electronic device on the downlink signal when scheduling the downlink signal. For example, when the number of reflected signals to be received by the terminal device is relatively large, the network device should take into account that the downlink signal cannot carry too much information when scheduling the downlink signal; if the downlink signal itself is a high-order modulated signal, when the downlink signal and a large amount of reflected signals are received by the terminal device together, a reception quality of the downlink signal may be degraded. For another example, the frequency ranges of the downlink signals that the different types of first electronic devices can reflect may be different. For example, a first electronic device close to a body may need a lower frequency, while a first electronic device hanging on clothes may use a higher frequency, and the network device may need to schedule downlink signals of different frequency ranges for different types of first electronic devices.

In a specific embodiment, the terminal device sends the network device first indication information which indicates that the terminal device has a capability of receiving a backscatter communication signal; the network device sends the downlink signal according to the first indication information, the first electronic device reflects the downlink signal, the terminal device receives the downlink signal and a reflected signal formed by the first electronic device reflecting the downlink signal. Wherein, the reflected signal may include information collected by the first electronic device. The first electronic device may be a sensor disposed on a user's body for monitoring the user's body state, and the terminal device may be a mobile phone of the user.

In some embodiments, the method may further include the following act S303.

In the act S303, the terminal device sends second indication information to the network device.

In some embodiments, the second indication information is used to indicate a capability of the terminal device and/or first time, and the first time is time during which that is time when the terminal device does not receive the downlink signal.

For example, because the terminal device may need to receive the downlink signal sent by the network device to the terminal device and the reflected signal sent by the first electronic device at the same time, especially in a case of a large amount of the reflected signals, there is a challenge to a receiving capability of the terminal device. In addition, due to a low cost of the first electronic device and uncontrollable factors such as reflection time and frequency, the reflected signal cannot be well aligned with a downlink signal sent by the network device in terms of arrival time and frequency, so that the terminal device may not receive a normal cellular communication signal (i.e. the downlink signal sent by the network device) in a short time after the reflected signal is received. In this scenario, when sending the scheduling request to the network device for requesting to schedule the downlink signal, the terminal device may require the network device to give the terminal device a certain processing time after the downlink signal is scheduled; the network device can indicate, in the scheduling information, that the terminal device does not need to receive the downlink signal for a period of time (such as in several symbols or scheduling units) after the downlink signal; during this period of time, the network device does not send any downlink scheduling to the terminal device. Wherein, when requesting the network device to give the terminal device a certain processing time after the downlink signal is scheduled, the terminal device can directly send the first time to the network device; the terminal device can also send a capability of the terminal device to the network device. Different capabilities of the terminal device correspond to different first times, and the network device can be aware of processing time that the terminal device expects to obtain, according to a capability of the terminal device.

In some embodiments, the method may further include the following act S304.

In the act S304, the terminal device receives third indication information sent by the network device.

In some embodiments, the third indication information is used to indicate at least one of a frequency, time, and a type of the downlink signal which are used by the network device to send the downlink signal.

In some embodiments, the third indication information may be carried in a dedicated DCI or a common DCI.

In a specific implementation, taking third indication information which can be carried in a dedicated DCI as an example, if the number of first electronic devices needed to reflect signals is small and the amount of information needed to be transmitted by the first electronic device is also small, then the network device can take a downlink service channel, such as a PDSCH, as the downlink signal; at this time, the PDSCH includes information transmitted from the network device to the terminal device. If the number of the first electronic devices needed to reflect the signals is large or the amount of the information needed to be transmitted by the first electronic devices is large, then the network device can directly take a downlink reference signal, such as a downlink DMRS , as the downlink signal. Optionally, the network device informs the terminal device of the type of downlink signal.

In a specific implementation, taking third indication information which can be carried in a common DCI as an example, that is, the downlink signal sent by the network device in a broadcast mode is used as the reflected signal for the information collected by the first electronic device. For example, some terminal devices send, to the network device, requests for emitting the downlink signal at the same time, and the requests are similar in terms of types of first electronic devices and frequencies needed. In this scenario, the network device can save signaling overhead by sending downlink signals in the broadcast mode and can efficiently send downlink signals to the terminal devices. For example, through a common-DCI, a network device can notify a group of terminal devices that downlink signals are emitted at which time, by which frequency, and in which signal mode. The terminal devices can receive the reflected signal formed by the first electronic device reflecting the downlink signal, and the reflected signal carries the information collected by the first electronic device.

In some application scenarios, the first electronic device may be a sensor disposed near the human body, such as a sensor for monitoring human health, and there may be a very urgent demand on health monitoring. For example, the terminal device detects a sudden fall of the human body by its own acceleration sensor, or a smart watch detects cardiac arrest and then sends an alarm message to the terminal device. At this time, the terminal device needs to read information from a sensor near the body urgently. Therefore, there is a need for a mechanism for a terminal device to quickly send a request for scheduling downlink signals to a network device.

In some embodiments, the network device reserves, for the terminal device, resources for an emergency request in an uplink control channel, such as a Physical Uplink Control Channel (PUCCH); when the terminal device has a request for emergency scheduling, the terminal device can immediately send a scheduling request to the network device by the reserved resources. When receiving the scheduling request sent by the terminal device, the network device can directly schedule the downlink signal to the terminal device, and the downlink signal can be used for the terminal device to obtain the information collected by the first electronic device. Optionally, when the terminal device uses the resources reserved by the network device to perform an emergency scheduling request, the scheduling request may carry only 1 bit of information.

In some embodiments, the method may further include the following act S305.

In the act S305, the terminal device receives fourth indication information sent by the network device.

In some embodiments, the fourth indication information is used to indicate the terminal device to use a downlink signal which has been scheduled by the network device, and the fourth indication information is used to indicate that the network device schedules at least one of a frequency, time used by the downlink signal, and a type of the downlink signal. Optionally, the fourth indication information is used to indicate at least one of time, a frequency, and a type of the downlink signal to be scheduled.

In a specific implementation, some of the downlink signals which have been scheduled by the network device cannot be used by the terminal device, for example, an MCS level of the downlink signals is high, an effect of receiving the reflected signal by the terminal device may be affected. If the downlink signals which have been scheduled by the network device cannot be used for reflection by the first electronic device, or the network device does not schedule the downlink signals, the fourth indication information is used to indicate at least one of the time, the frequencies of the downlink signals to be scheduled and the type of the downlink signal to be scheduled. The terminal device may discard a signal scheduled by the network device before the network device indicates the time and the frequencies of the downlink signals to be scheduled. Wherein, the fourth indication information can be carried in a dedicated DCI or a common DCI.

In an embodiment of the present application, a downlink signal is sent by a network device, and the first electronic device carries information collected by a first electronic device based on a reflected signal of the downlink signal; the terminal device can receive the reflected signal carrying the information collected by the first electronic device. In this way, complexity of a receiver in an electronic device caused by a terminal device emitting signals to a human body and receiving a reflected signal in the prior art, is avoided. Moreover, a risk that a user is exposed to electromagnetic radiation caused by that the terminal device directly emits signals to the human body when the first electronic device is near the human body, is avoided.

It should be understood that in various embodiments of the present application, sequence numbers of the various processes do not imply an order of execution of the various processes, the order of execution should be determined by their functions and internal logics, but should not constitute any limitation on implementation processes of the embodiments of the present application.

In order to implement the method for backscatter communication, a terminal device is provided in an embodiment of the present application. A schematic diagram of an optional composition structure of a terminal device 400, as shown in FIG. 4, includes a first sending unit 401.

The first sending unit 401 is configured to send first indication information to a network device, wherein the first indication information is used to indicate that the terminal device has an ability of receiving a backscatter communication signal.

In some embodiments, the first indication information is further used to indicate at least one of the following:
the number of first electronic devices using a downlink signal;
the amount of information that the first electronic device needs to transmit;
a waveform and/or a modulation mode superimposed by the first electronic device on the reflected downlink signal; and
frequency ranges of downlink signals that different types of first electronic devices can reflect;
wherein, the downlink signal is sent by the network device.

In some embodiments, the first sending unit 401 is further configured to send a scheduling request to a network device, wherein the scheduling request is used to request the network device to schedule a downlink signal, and the downlink signal is used for a first electronic device to reflect a signal.

In some embodiments, the first sending unit 401 is further configured to send second indication information to the network device; wherein the second indication information is used to indicate a capability of the terminal device and/or first time that is time when the terminal device does not receive the downlink signal.

In some embodiments, the terminal device 400 further includes a first receiving unit 402.

The first receiving unit 402 is configured to receive third information sent by the network device; wherein the third indication information is used to indicate at least one of a frequency, time, and a type of the downlink signal which are used by the network device to send the downlink signal.

In some embodiments, the third indication information is carried in a dedicated DCI or a common DCI.

In some embodiments, the terminal device 400 further includes a second receiving unit 403.

The second receiving unit 403 is configured to receive fourth information sent by the network device; wherein the fourth indication information is used to indicate the terminal device to use a downlink signal which has been scheduled by the network device, and the fourth indication information is used to indicate that the network device schedules at least one of a frequency, time used by the downlink signal, and a type of the downlink signal; or, the fourth indication information is used to indicate at least one of time, a frequency, and a type of the downlink signal to be scheduled.

In some embodiments, the scheduling request is transmitted based on resources reserved by the network device on an uplink control channel.

In some embodiments, the fourth indication information is carried in a dedicated DCI or a common DCI.

In some embodiments, the downlink signal includes: a PDSCH or a downlink reference signal.

In order to implement the method for backscatter communication, a network device is provided in an embodiment of the present application. A schematic diagram of an optional composition structure of a network device 500, as shown in FIG. 5, includes a third receiving unit 501.

The third receiving unit 501 is configured to receive first indication information sent by a terminal device, wherein the first indication information is used to indicate that the terminal device has an ability of receiving a backscatter communication signal.

In some embodiments, the first indication information is further used to indicate at least one of the following:
the number of first electronic devices using a downlink signal;
the amount of information that the first electronic device needs to transmit;
a waveform and/or a modulation mode superimposed by the first electronic device on the reflected downlink signal; and
frequency ranges of downlink signals that different types of first electronic devices can reflect;
wherein, the downlink signal is sent by the network device.

In some embodiments, the third receiving unit 501 is further configured to receive a scheduling request sent by a terminal device, wherein the scheduling request is used to request the network device to schedule a downlink signal, and the downlink signal is used for a first electronic device to reflect a signal.

In some embodiments, the third receiving unit 501 is further configured to receive second indication information sent by the terminal device; wherein the second indication information is used to indicate a capability of the terminal device and/or first time, and the first time is time during which the terminal device does not receive the downlink signal.

In some embodiments, the network device 500 further includes a second sending unit 502.

The second sending unit 502 is configured to send third indication information to the terminal device; wherein the third indication information is used to indicate at least one of a frequency, time, and a type of the downlink signal which are used by the network device to send the downlink signal.

In some embodiments, the third indication information is carried in a dedicated DCI or a common DCI.

In some embodiments, the network device 500 further includes a third sending unit 503.

The third sending unit 503 is configured to send fourth indication information to the terminal device; wherein the fourth indication information is used to indicate the terminal device to use a downlink signal which has been scheduled by the network device, and the fourth indication information is used to indicate that the network device schedules at least one of a frequency, time used by the downlink signal, and a type of the downlink signal; or, the fourth indication information is used to indicate at least one of time, a frequency, and a type of the downlink signal to be scheduled.

In some embodiments, the scheduling request is transmitted based on resources reserved by the network device on an uplink control channel.

In some embodiments, the fourth indication information is carried in a dedicated DCI or a common DCI.

In some embodiments, the downlink signal includes a Physical Downlink Shared Channel (PDSCH) or a downlink reference signal.

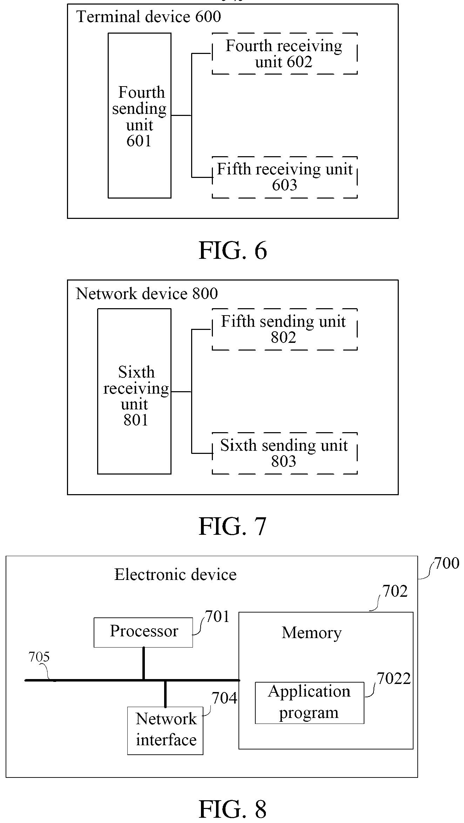

In order to implement the method for backscatter communication, a terminal device is provided in an embodiment of the present application. A schematic diagram of another optional composition structure of a terminal device 600, as shown in FIG. 6, includes a fourth sending unit 601.

The fourth sending unit 601 is configured to send a scheduling request to a network device, wherein the scheduling request is used to request the network device to schedule a downlink signal, and the downlink signal is used for a first electronic device to reflect a signal.

In some embodiments, the fourth sending unit 601 is further configured to send first indication information to a network device, wherein the first indication information is used to indicate that the terminal device has an ability of receiving a backscatter communication signal.

In some embodiments, the fourth sending unit 601 is further configured to send second indication information to the network device; wherein the second indication information is used to indicate a capability of the terminal device and/or first time , and the first time is time during which the terminal device does not receive the downlink signal.

In some embodiments, the terminal device 600 further includes a fourth receiving unit 602.

The fourth receiving unit 602 is configured to receive third information sent by the network device; wherein the third indication information is used to indicate at least one of a frequency, time, and a type of the downlink signal which are used by the network device to send the downlink signal.

In some embodiments, the third indication information is carried in a dedicated DCI or a common DCI.

In some embodiments, the terminal device 600 further includes a fifth receiving unit 603.

The fifth receiving unit 603 is configured to receive fourth information sent by the network device; wherein the fourth indication information is used to indicate the terminal device to use a downlink signal which has been scheduled by the network device, and the fourth indication information is used to indicate that the network device schedules at least one of a frequency, time used by the downlink signal, and a type of the downlink signal; or, the fourth indication information is used to indicate at least one of time, a frequency, and a type of the downlink signal to be scheduled.

In some embodiments, the scheduling request is transmitted based on resources reserved by the network device on an uplink control channel.

In some embodiments, the fourth indication information is carried in a dedicated DCI or a common DCI.

In some embodiments, the downlink signal includes: a PDSCH or a downlink reference signal.

In order to implement the method for backscatter communication, a network device is provided in an embodiment of the present application. A schematic diagram of another optional composition structure of a network device 800, as shown in FIG. 7, includes a sixth receiving unit 801.

The sixth receiving unit 801 is configured to receive a scheduling request sent by a terminal device, wherein the scheduling request is used to request the network device to schedule a downlink signal, and the downlink signal is used for a first electronic device to reflect a signal.

In some embodiments, the sixth receiving unit 801 is further configured to receive first indication information sent by a terminal device, wherein the first indication information is used to indicate that the terminal device has an ability of receiving a backscatter communication signal.

In some embodiments, the sixth receiving unit 801 is further configured to receive second indication information sent by the terminal device; wherein the second indication information is used to indicate a capability of the terminal device and/or first time, and the first time is time during which the terminal device does not receive the downlink signal.

In some embodiments, the network device 800 further includes a fifth sending unit 802.

The fifth sending unit 802 is configured to send third indication information to the terminal device; wherein the third indication information is used to indicate at least one of a frequency, time, and a type of the downlink signal which are used by the network device to send the downlink signal.

In some embodiments, the third indication information is carried in a dedicated DCI or a common DCI.

In some embodiments, the network device 800 further includes a sixth sending unit 803.

The sixth sending unit 803 is configured to send fourth indication information to the terminal device; wherein the fourth indication information is used to indicate the terminal device to use a downlink signal which has been scheduled by the network device, and the fourth indication information is used to indicate that the network device schedules at least one of a frequency, time used by the downlink signal, and a type of the downlink signal; or, the fourth indication information is used to indicate at least one of time, a frequency, and a type of the downlink signal to be scheduled.

In some embodiments, the scheduling request is transmitted based on resources reserved by the network device on an uplink control channel.

In some embodiments, the fourth indication information is carried in a dedicated DCI or a common DCI.

In some embodiments, the downlink signal includes a PDSCH or a downlink reference signal.

A terminal device is also provided in an embodiment of the present application, including: a processor and a memory that is configured to store a computer program which is capable of being run on the processor, wherein the processor is configured to perform the acts of the method for backscatter communication performed by the terminal device when running the computer program.

A network device is also provided in an embodiment of the present application, including a processor and a memory that is configured to store a computer program that is capable of being run on the processor, wherein the processor is configured to perform the acts of the method for backscatter communication performed by the network device when running the computer program.

A chip is also provided in an embodiment of the application, including a processor for invoking and running a computer program from a memory, so that a device having the chip installed therein performs the method for backscatter communication performed by the terminal device.

A chip is also provided in an embodiment of the application, including a processor for invoking and running a computer program from a memory, so that a device having the chip installed therein performs the method for backscatter communication performed by the network device.

A storage medium is also provided in an embodiment of the present application, which stores an executable program, wherein, when the executable program is executed by a processor, the method for backscatter communication performed by the terminal device is implemented.

A storage medium is also provided in an embodiment of the present application, which stores an executable program, wherein, when the executable program is executed by a processor, the method for backscatter communication performed by the network device is implemented.

A computer program product is also provided in an embodiment of the present application, which includes computer program instructions that enable a computer to perform the method for backscatter communication performed by the terminal device.

A computer program product is also provided in an embodiment of the present application, which includes computer program instructions that enable a computer to perform the method for backscatter communication performed by the network device.

A computer program is also provided in an embodiment of the present application, which enables a computer to perform the method for backscatter communication performed by the terminal device.

A computer program is also provided in an embodiment of the present application, which enables a computer to perform the method for backscatter communication performed by the network device.

FIG. 8 is a schematic diagram of a hardware composition structure of an electronic device (a terminal device or a network device) according to an embodiment of the present application. An electronic device 700 includes: at least one processor 701, a memory 702, and at least one network interface 704. Various components in the electronic device 700 are coupled together by a bus system 705. It may be understood that the bus system 705 is used for implementing connection and communication between these components. In addition to a data bus, the bus system 705 further includes a power bus, a control bus, and a status signal bus. However, for clarity, all kinds of buses are labeled as a bus system 705 in FIG. 8.

It can be understood that the memory 702 may be a volatile memory or a non-volatile memory, or may include both the volatile memory and the non-volatile memory. Herein, the non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, a compact disk, or a Compact Disc Read-Only Memory (CD-ROM); and the magnetic surface memory may be a magnetic disk memory or a magnetic tape memory. The transitory memory may be a Random Access Memory (RAM) which serves as an external cache. By way of illustrative but not restrictive explanation, many forms of RAMs are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), a Direct Rambus Random Access Memory (DRRAM). The memory 702 described in an embodiment of the present application is intended to include, but is not limited to, these and any other suitable types of memories.

The memory 702 in an embodiment of the present application is configured to store various types of data to support operations of the electronic device 700. Examples of such data include any computer program for operating on the electronic device 700, such as an application 7022. A program for implementing the method of an embodiment of the present application may be contained in the application program 7022.

Methods disclosed in above embodiments of the present application may be applied to the processor 701, or implemented by the processor 701. The processor 701 may be an integrated circuit chip with a signal processing capability. In an implementation process, various acts of the methods described above may be accomplished by integrated logic circuits of hardware in the processor 701 or instructions in a form of software. The above processor 701 may be a general purpose processor, a Digital Signal Processor (DSP), or other programmable logic devices, a discrete gate or transistor logic device, or a discrete hardware component, etc. The processor 701 may implement or execute various methods, acts, and logical block diagrams disclosed in an embodiments of the present application. The general purpose processor may be a microprocessor or any conventional processor or the like. The acts of the methods disclosed in embodiments of the present application may be directly embodied to be executed by a hardware decoding processor, or may be performed by a combination of hardware in the decoding processor and software modules. The software module may be located in a storage medium, and the storage medium is located in the memory 702. The processor 701 reads information in the memory 702 and accomplishes the acts of the aforementioned methods in combination with hardware thereof.

In an exemplary embodiment, an electronic device 700 may be implemented by one or more Application Specific Integrated Circuits (ASICs), DSPs, Programmable Logic Devices (PLDs), Complex Programmable Logic Devices (CPLDs), FPGAs, general-purpose processors, controllers, MCUs, MPUs or other electronic components, for executing the aforementioned methods.

The present application is described with reference to flowcharts and/or block diagrams of the methods, the devices (systems), and computer program products of the embodiments of the present application. It should be understood that each flow and/or block in the flowchart and/or block diagram, and combinations of flows and/or blocks in the flowchart and/or block diagram can be implemented by computer program instructions. These computer program instructions may be provided to a general purpose computer, a special purpose computer, an embedded processor or a processor of other programmable data processing device to produce a machine, such that the instructions which are executed by the computer or the processor of other programmable data processing device produce apparatus for implementing the functions specified in one or more flows of the flowchart and/or one or more blocks of the block diagram.

These computer program instructions may also be stored in a computer-readable memory that can direct a computer or other programmable data processing device to operate in a specific manner, such that the instructions stored in the computer-readable memory produce an article of manufacture including instruction apparatus that implement the functions specified in one or more flows of the flowchart and/or one or more blocks of the block diagram.

These computer program instructions may also be loaded onto a computer or other programmable data processing device, such that a series of operational acts are performed on the computer or other programmable device to produce a computer-implemented processing, thereby the instructions which are executed on the computer or other programmable device are used for implementing acts of the functions specified in one or more flows of the flowchart and/or one or more blocks of the block diagram.

It should be understood that the terms "system" and "network" in the present application are often used interchangeably herein. The term "and/or" in the present application describes an association relation between associated objects only, indicating that there may be three relations, for example, A and/or B may indicate three cases: A alone, both A and B, and B alone. In addition, the symbol "/" in the present application generally indicates that there is a "or" relationship between the associated objects before and after "/".

The above description is only the preferred embodiments of the present application, but is not intended to limit the protection scope of the present application. Any modification, equivalent substitution, improvement, or the like, made within the spirit and the principle of the present application shall be included within the protection scope of the present application.

## Claims

1. A method for backscatter communication, comprising:
sending, by a terminal device, first indication information to a network device, wherein the first indication information is used for indicating that the terminal device has an ability of receiving a backscatter communication signal.

2. The method of claim 1, wherein the first indication information is further used for indicating at least one of:
a number of first electronic devices using a downlink signal;
an amount of information that the first electronic device needs to transmit;
a waveform and/or a modulation mode superimposed by the first electronic device on a reflected downlink signal; and
frequency ranges of downlink signals capable of being reflected by different types of first electronic devices;
wherein, the downlink signal is sent by the network device.

3. The method of claim 1 or 2, further comprising:
sending, by the terminal device, a scheduling request to the network device, wherein the scheduling request is used for requesting the network device to schedule a downlink signal, and the downlink signal is used for a first electronic device to reflect a signal.

4. The method of claim 3, further comprising:
sending, by the terminal device, second indication information to the network device;
wherein the second indication information is used for indicating a capability of the terminal device and/or first time, and the first time is time during which the terminal device does not receive the downlink signal.

5. The method of claim 3 or 4, further comprising:
receiving, by the terminal device, third indication information sent by the network device;
wherein the third indication information is used for indicating at least one of a frequency, time, and a type of the downlink signal which are used by the network device to send the downlink signal.

6. The method of claim 5, wherein the third indication information is carried in a dedicated downlink control information (DCI) or a common DCI.

7. The method of claim 3, further comprising:
receiving, by the terminal device, fourth indication information sent by the network device;
wherein the fourth indication information is used for indicating the terminal device to use a downlink signal which has been scheduled by the network device, and the fourth indication information is used for indicating that the network device schedules at least one of a frequency, time used by the downlink signal, and a type of the downlink signal;
or, the fourth indication information is used for indicating at least one of time, a frequency, and a type of the downlink signal to be scheduled.

8. The method of claim 7, wherein the scheduling request is transmitted based on resources reserved by the network device on an uplink control channel.

9. The method of claim 7 or 8, wherein the fourth indication information is carried in a dedicated DCI or a common DCI.

10. The method of any one of claims 3 to 9, wherein the downlink signal comprises:
a Physical Downlink Shared Channel (PDSCH) or a downlink reference signal.

11. A method for backscatter communication, comprising:
receiving, by a network device, first indication information sent by a terminal device, wherein the first indication information is used for indicating that the terminal device has an ability of receiving a backscatter communication signal.

12. The method of claim 11, wherein the first indication information is further used for indicating at least one of:
a number of first electronic devices using a downlink signal;
an amount of information that the first electronic device needs to transmit;
a waveform and/or a modulation mode superimposed by the first electronic device on a reflected downlink signal; and
frequency ranges of downlink signals capable of being reflected by different types of first electronic devices can reflect;
wherein, the downlink signal is sent by the network device.

13. The method of claim 11 or 12, further comprising:
receiving, by the network device, a scheduling request sent by the terminal device, wherein the scheduling request is used for requesting the network device to schedule a downlink signal, and the downlink signal is used for a first electronic device to reflect a signal.

14. The method of claim 13, further comprising:
receiving, by the network device, second indication information sent by the terminal device;
wherein the second indication information is used for indicating a capability of the terminal device and/or first time, and the first time is time during which the terminal device does not receive the downlink signal.

15. The method of claim 13 or 14, further comprising:
sending, by the network device, third indication information to the terminal device;
wherein the third indication information is used for indicating at least one of a frequency, time, and a type of the downlink signal which are used by the network device to send the downlink signal.

16. The method of claim 15, wherein the third indication information is carried in a dedicated downlink control information (DCI) or a common DCI.

17. The method of claim 13, further comprising:
sending, by the network device, fourth indication information to the terminal device;
wherein the fourth indication information is used for indicating the terminal device to use a downlink signal which has been scheduled by the network device, and the fourth indication information is used for indicating that the network device schedules at least one of a frequency, time used by the downlink signal, and a type of the downlink signal;
or, the fourth indication information is used for indicating at least one of time, a frequency, and a type of the downlink signal to be scheduled.

18. The method of claim 17, wherein the scheduling request is transmitted based on resources reserved by the network device on an uplink control channel.

19. The method of claim 17 or 18, wherein the fourth indication information is carried in a dedicated DCI or a common DCI.

20. The method of any one of claims 13 to 19, wherein the downlink signal comprises:
a Physical Downlink Shared Channel (PDSCH) or a downlink reference signal.

21. A method for backscatter communication, comprising:
sending, by a terminal device, a scheduling request to a network device, wherein the scheduling request is used for requesting the network device to schedule a downlink signal, and the downlink signal is used for a first electronic device to reflect a signal.

22. The method of claim 21, further comprising:
sending, by the terminal device, first indication information to the network device, wherein the first indication information is used for indicating that the terminal device has an ability of receiving a backscatter communication signal.

23. The method of claim 21 or 22, further comprising:
sending, by the terminal device, second indication information to the network device;
wherein the second indication information is used for indicating a capability of the terminal device and/or first time, and the first time is time during which the terminal device does not receive the downlink signal.

24. The method of any one of claims 21 to 23, further comprising:
receiving, by the terminal device, third indication information sent by the network device;
wherein the third indication information is used for indicating at least one of a frequency, time, and a type of the downlink signal which are used by the network device to send the downlink signal.

25. The method of claim 24, wherein the third indication information is carried in a dedicated downlink control information (DCI) or a common DCI.

26. The method of any one of claims 21 to 23, further comprising:
receiving, by the terminal device, fourth indication information sent by the network device;
wherein the fourth indication information is used for indicating the terminal device to use a downlink signal which has been scheduled by the network device, and the fourth indication information is used for indicating that the network device schedules at least one of a frequency, time used by the downlink signal, and a type of the downlink signal;
or, the fourth indication information is used for indicating at least one of time, a frequency, and a type of the downlink signal to be scheduled.

27. The method of claim 26, wherein the scheduling request is transmitted based on resources reserved by the network device on an uplink control channel.

28. The method of claim 26 or 27, wherein the fourth indication information is carried in a dedicated DCI or a common DCI.

29. The method of any one of claims 21 to 28, wherein the downlink signal comprises:
a Physical Downlink Shared Channel (PDSCH) or a downlink reference signal.

30. A method for backscatter communication, comprising:
receiving, by a network device, a scheduling request sent by a terminal device, wherein the scheduling request is used for requesting the network device to schedule a downlink signal, and the downlink signal is used for a first electronic device to reflect a signal.

31. The method of claim 30, further comprising:
receiving, by the network device, first indication information sent by the terminal device, wherein the first indication information is used for indicating that the terminal device has an ability of receiving a backscatter communication signal.

32. The method of claim 30 or 31, further comprising:
receiving, by the network device, second indication information sent by the terminal device; wherein the second indication information is used for indicating a capability of the terminal device and/or first time, and the first time is time during which the terminal device does not receive the downlink signal.

33. The method of any one of claims 30 to 32, further comprising:
sending, by the network device, third indication information to the terminal device;
wherein the third indication information is used for indicating at least one of a frequency, time, and a type of the downlink signal which are used by the network device to send the downlink signal.

34. The method of claim 33, wherein the third indication information is carried in a dedicated downlink control information (DCI) or a common DCI.

35. The method of any one of claims 30 to 32, further comprising:
sending, by the network device, fourth indication information to the terminal device;
wherein the fourth indication information is used for indicating the terminal device to use a downlink signal which has been scheduled by the network device, and the fourth indication information is used for indicating that the network device schedules at least one of a frequency, time used by the downlink signal, and a type of the downlink signal;
or, the fourth indication information is used for indicating at least one of time, a frequency, and a type of the downlink signal to be scheduled.

36. The method of claim 35, wherein the scheduling request is transmitted based on resources reserved by the network device on an uplink control channel.

37. The method of claim 35 or 36, wherein the fourth indication information is carried in a dedicated DCI or a common DCI.

38. The method of any one of claims 30 to 37, wherein the downlink signal comprises:
a Physical Downlink Shared Channel (PDSCH) or a downlink reference signal.

39. A terminal device, comprising:
a first sending unit, configured to send first indication information to a network device, wherein the first indication information is used for indicating that the terminal device has an ability of receiving a backscatter communication signal.

40. The terminal device of claim 39, wherein the first indication information is further used for indicating at least one of:
a number of first electronic devices using a downlink signal;
an amount of information that the first electronic device needs to transmit;
a waveform and/or a modulation mode superimposed by the first electronic device on a reflected downlink signal; and
frequency ranges of downlink signals capable of being reflected by different types of first electronic devices;
wherein, the downlink signal is sent by the network device.

41. The terminal device of claim 39 or 40, wherein the first sending unit is further configured to send a scheduling request to the network device, wherein the scheduling request is used for requesting the network device to schedule a downlink signal, and the downlink signal is used for a first electronic device to reflect a signal.

42. The terminal device of claim 41, wherein the first sending unit is further configured to send second indication information to the network device;
wherein the second indication information is used for indicating a capability of the terminal device and/or first time, and the first time is time during which the terminal device does not receive the downlink signal.

43. The terminal device of claim 41 or 42, further comprising:
a first receiving unit, configured to receive third information sent by the network device;
wherein the third indication information is used for indicating at least one of a frequency, time, and a type of the downlink signal which are used by the network device to send the downlink signal.

44. The terminal device of claim 43, wherein the third indication information is carried in a dedicated downlink control information (DCI) or a common DCI.

45. The terminal device of claim 41, further comprising:
a second receiving unit, configured to receive fourth information sent by the network device;
wherein the fourth indication information is used for indicating the terminal device to use a downlink signal which has been scheduled by the network device, and the fourth indication information is used for indicating that the network device schedules at least one of a frequency, time used by the downlink signal, and a type of the downlink signal;
or, the fourth indication information is used for indicating at least one of time, a frequency, and a type of the downlink signal to be scheduled.

46. The terminal device of claim 45, wherein the scheduling request is transmitted based on resources reserved by the network device on an uplink control channel.

47. The terminal device of claim 45 or 46, wherein the fourth indication information is carried in a dedicated DCI or a common DCI.

48. The terminal device of any one of claims 41 to 47, wherein the downlink signal comprises:
a Physical Downlink Shared Channel (PDSCH) or a downlink reference signal.

49. A network device, comprising:
a third receiving unit, configured to receive first indication information sent by a terminal device, wherein the first indication information is used for indicating that the terminal device has an ability of receiving a backscatter communication signal.

50. The network device of claim 49, wherein the first indication information is further used for indicating at least one of:
a number of first electronic devices using a downlink signal;
an amount of information that the first electronic device needs to transmit;
a waveform and/or a modulation mode superimposed by the first electronic device on a reflected downlink signal; and
frequency ranges of downlink signals capable of being reflected by different types of first electronic devices;
wherein, the downlink signal is sent by the network device.

51. The network device of claim 49 or 50, wherein the third receiving unit is further configured to receive a scheduling request sent by the terminal device, wherein the scheduling request is used for requesting the network device to schedule a downlink signal, and the downlink signal is used for a first electronic device to reflect a signal.

52. The network device of claim 51, wherein the third receiving unit is further configured to receive second indication information sent by the terminal device;
wherein the second indication information is used for indicating a capability of the terminal device and/or first time, and the first time is time during which the terminal device does not receive the downlink signal.

53. The network device of claim 51 or 52, further comprising:
a second sending unit, configured to send third indication information to the terminal device;
wherein the third indication information is used for indicating at least one of a frequency, time, and a type of the downlink signal which are used by the network device to send the downlink signal.

54. The network device of claim 53, wherein the third indication information is carried in a dedicated downlink control information (DCI) or a common DCI.

55. The network device of claim 51, further comprising:
a third sending unit, configured to send fourth indication information to the terminal device;
wherein the fourth indication information is used for indicating the terminal device to use a downlink signal which has been scheduled by the network device, and the fourth indication information is used for indicating that the network device schedules at least one of a frequency, time used by the downlink signal, and a type of the downlink signal;
or, the fourth indication information is used for indicating at least one of time, a frequency, and a type of the downlink signal to be scheduled.

56. The network device of claim 55, wherein the scheduling request is transmitted based on resources reserved by the network device on an uplink control channel.

57. The network device of claim 55 or 56, wherein the fourth indication information is carried in a dedicated DCI or a common DCI.

58. The network device of any one of claims 51 to 57, wherein the downlink signal comprises:
a Physical Downlink Shared Channel (PDSCH) or a downlink reference signal.

59. A terminal device, comprising:
a fourth sending unit, configured to send a scheduling request to a network device, wherein the scheduling request is used for requesting the network device to schedule a downlink signal, and the downlink signal is used for a first electronic device to reflect a signal.

60. The terminal device of claim 59, wherein the fourth sending unit is further configured to send first indication information to a network device, wherein the first indication information is used for indicating that the terminal device has an ability of receiving a backscatter communication signal.

61. The terminal device of claim 59 or 60, wherein the fourth sending unit is further configured to send second indication information to the network device;
wherein the second indication information is used for indicating a capability of the terminal device and/or first time, and the first time is time during which the terminal device does not receive the downlink signal.

62. The terminal device of any one of claims 59 to 61, further comprising:
a fourth receiving unit, configured to receive third information sent by the network device;
wherein the third indication information is used for indicating at least one of a frequency, time, and a type of the downlink signal which are used by the network device to send the downlink signal.

63. The terminal device of claim 62, wherein the third indication information is carried in a dedicated downlink control information (DCI) or a common DCI.

64. The terminal device of any one of claims 59 to 63, further comprising:
a fifth receiving unit, configured to receive fourth information sent by the network device;
wherein the fourth indication information is used for indicating the terminal device to use a downlink signal which has been scheduled by the network device, and the fourth indication information is used for indicating that the network device schedules at least one of a frequency, time used by the downlink signal, and a type of the downlink signal;
or, the fourth indication information is used for indicating at least one of time, a frequency, and a type of the downlink signal to be scheduled.

65. The terminal device of claim 64, wherein the scheduling request is transmitted based on resources reserved by the network device on an uplink control channel.

66. The terminal device of claim 64 or 65, wherein the fourth indication information is carried in a dedicated DCI or a common DCI.

67. The terminal device of any one of claims 59 to 66, wherein the downlink signal comprises:
a Physical Downlink Shared Channel (PDSCH) or a downlink reference signal.

68. A network device, comprising:
a sixth receiving unit, configured to receive a scheduling request sent by a terminal device, wherein the scheduling request is used for requesting the network device to schedule a downlink signal, and the downlink signal is used for a first electronic device to reflect a signal.

69. The network device of claim 68, wherein the sixth receiving unit is further configured to receive first indication information sent by the terminal device, wherein the first indication information is used for indicating that the terminal device has an ability of receiving a backscatter communication signal.

70. The network device of claim 68 or 69, wherein the sixth receiving unit is further configured to receive second indication information sent by the terminal device; wherein the second indication information is used for indicating a capability of the terminal device and/or first time, and the first time is time during which the terminal device does not receive the downlink signal.

71. The network device of any one of claims 68 to 70, further comprising:
a fifth sending unit, configured to send third indication information to the terminal device;
wherein the third indication information is used for indicating at least one of a frequency, time, and a type of the downlink signal which are used by the network device to send the downlink signal.

72. The network device of claim 71, wherein the third indication information is carried in a dedicated downlink control information (DCI) or a common DCI.

73. The network device of any one of claims 68 to 70, further comprising:
a sixth sending unit, configured to send fourth indication information to the terminal device;
wherein the fourth indication information is used for indicating the terminal device to use a downlink signal which has been scheduled by the network device, and the fourth indication information is used for indicating that the network device schedules at least one of a frequency, time used by the downlink signal, and a type of the downlink signal;
or, the fourth indication information is used for indicating at least one of time, a frequency, and a type of the downlink signal to be scheduled.

74. The network device of claim 73, wherein the scheduling request is transmitted based on resources reserved by the network device on an uplink control channel.

75. The network device of claim 73 or 74, wherein the fourth indication information is carried in a dedicated DCI or a common DCI.

76. The network device of any one of claims 68 to 75, wherein the downlink signal comprises:
a Physical Downlink Shared Channel (PDSCH) or a downlink reference signal.

77. A terminal device, comprising: a processor and a memory for storing a computer program that is capable of being run on the processor; wherein
the processor is configured to perform acts of the method for backscatter communication of any one of claims 1-10 when running the computer program.

78. A network device, comprising: a processor and a memory for storing a computer program that is capable of being run on the processor; wherein
the processor is configured to perform acts of the method for backscatter communication of any one of claims 11-20 when running the computer program.

79. A terminal device, comprising: a processor, and a memory for storing a computer program that is capable of being run on the processor, wherein the processor is configured to perform acts of the method for backscatter communication of any one of claims 21-29 when running the computer program.

80. A network device, comprising: a processor, and a memory for storing a computer program that is able to be run on the processor, wherein the processor is configured to execute acts in the method according to any one of claims 30 to 38 when running the computer program.

81. A storage medium, storing an executable program, wherein, when the executable program is executed by a processor, the method for backscatter communication of any one of claims 1 to 10 is implemented.

82. A storage medium, storing an executable program, wherein, when the executable program is executed by a processor, the method for backscatter communication of any one of claims 11 to 20 is implemented.

83. A storage medium, storing an executable program, wherein, when the executable program is executed by a processor, the method for backscatter communication of any one of claims 21 to 29 is implemented.

84. A storage medium, storing an executable program, wherein, when the executable program is executed by a processor, the method for backscatter communication of any one of claims 30 to 38 is implemented.

85. A computer program product, comprising computer program instructions that enable a computer to perform the method for backscatter communication of any one of claims 1 to 10.

86. A computer program product, comprising computer program instructions that enable a computer to perform the method for backscatter communication of any one of claims 11 to 20.

87. A computer program product, comprising computer program instructions that enable a computer to perform the method for backscatter communication of any one of claims 21 to 29.

88. A computer program product, comprising computer program instructions that enable a computer to perform the method for backscatter communication of any one of claims 30 to 38.

89. A computer program, enabling a computer to perform the method for backscatter communication of any one of claims 1 to 10.

90. A computer program, enabling a computer to perform the method for backscatter communication of any one of claims 11 to 20.

91. A computer program, enabling a computer to perform the method for backscatter communication of any one of claims 21 to 29.

92. A computer program, enabling a computer to perform the method for backscatter communication of any one of claims 30 to 38.

93. A chip, comprising: a processor configured to invoke and run a computer program from a memory, to enable a device having the chip installed thereon to perform the method for backscatter communication of any one of claims 1 to 10.

94. A chip, comprising: a processor configured to invoke and run a computer program from a memory, to enable a device having the chip installed thereon to perform the method for backscatter communication of any one of claims 11 to 20.

95. A chip, comprising: a processor configured to invoke and run a computer program from a memory, to enable a device having the chip installed thereon to perform the method for backscatter communication of any one of claims 21 to 29.

96. A chip, comprising: a processor configured to invoke and run a computer program from a memory, to enable a device having the chip installed thereon to perform the method for backscatter communication of any one of claims 30 to 38.
